# EUROPÄISCHE PATENTSCHRIFT

(11) **EP 3 123 051 B1**
(45) Veröffentlichungstag und Bekanntmachung des Hinweises auf die Patenterteilung: **04.09.2019**
(21) Anmeldenummer: 15718436.7
(22) Anmeldetag: 24.03.2015
(51) Int. Cl.: F16D 13/75, H02K 7/108

(54) **NACHSTELLEINRICHTUNG FÜR EINE REIBKUPPLUNG**
ADJUSTING DEVICE FOR A FRICTION CLUTCH
DISPOSITIF DE RATTRAPAGE POUR EMBRAYAGE À FRICTION

(30) Priorität: 25.03.2014 DE 102014205473
(43) Veröffentlichungstag der Anmeldung: 01.02.2017
(73) Patentinhaber: Schaeffler Technologies AG & Co. KG, 91074 Herzogenaurach (DE)
(72) Erfinder: NACHTMANN, Florian, F-67100 Strassburg (FR); AHNERT, Gerd, 77880 Sasbach (DE)
(86) Internationale Anmeldenummer: PCT/DE2015/200189
(87) Internationale Veröffentlichungsnummer: WO 2015/144165

(56) Entgegenhaltungen:
- DE-A1-102011 087 334
- DE-A1-102012 213 683
- DE-A1-102013 203 343
- DE-A1-102013 207 695
- DE-B4- 4 244 993
- FR-A1- 2 739 159

## Beschreibung

Die vorliegende Erfindung betrifft eine Nachstelleinrichtung gemäß dem Oberbegriff des Patentanspruchs 1. Insbesondere betrifft die Erfindung ein Federelement für eine Antriebseinheit für eine (weggesteuerte) Nachstelleinrichtung sowie eine Nachstelleinrichtung für eine Reibkupplung, insbesondere eine Trennkupplung beziehungsweise Zuschaltkupplung für einen Hybridantrieb einer parallel oder in Reihe geschalteten Verbrennungskraftmaschine und eines elektrischen Antriebs für ein Kraftfahrzeug. Unter einem Hybridantrieb wird derzeit im Kraftfahrzeugbereich meist die Kombination aus einem elektrischen Antrieb und einem Antrieb mit einer Verbrennungskraftmaschine verstanden. Dieses Verständnis wird auch in dieser Anmeldung zugrunde gelegt.

Im Stand der Technik sind verschiedene Nachstelleinrichtungen für Reibkupplungen bekannt, wobei diese häufig für Anwendungen mit großflächigen Reibelementen eingerichtet sind, zum Beispiel für Personenkraftwagen und Lastkraftwagen. Nun wird aber gefordert, dass kleinflächige Reibelemente verwendet werden, um besonders kompakte Reibkupplungen zur Verfügung zu stellen. Insbesondere für einen Hybridantrieb bestehend aus einer Verbrennungskraftmaschine und einem elektrischem Antrieb werden wegen des enormen Platzbedarfs kleine Komponenten gefordert. Ganz besonders eng sind die Platzverhältnisse für eine Reibkupplung, die als Trennkupplung beziehungsweise Zuschaltkupplung verwendet wird. Zum Ausgleich einer verschleißbedingten Zunahme des Einrückwegs zwischen den Reibelementen der Reibkupplung werden heutzutage Nachstelleinrichtungen gefordert, die die Länge des Einrückwegs (nahezu) konstant halten und zugleich den Betätigungsweg (nahezu) konstant halten. Die aus dem Stand der Technik bekannten Nachstelleinrichtungen weisen dabei den Nachteil auf, dass sie für die erhöhten Anforderungen entweder nicht ausreichend kompakt sind oder übermäßig störanfällig sind.

Aus der DE 10 2013 203343 A1 ist eine Nachstelleinrichtung bekannt, die auf den Oberbegriff des Patentanspruchs 1 lesbar ist.

Der vorliegenden Erfindung liegt die Aufgabe zugrunde, die aus dem Stand der Technik bekannten Nachteile zumindest teilweise zu überwinden. Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft eine Nachstelleinrichtung für eine Reibkupplung, welche zumindest die folgenden Komponenten aufweist:
- eine Antriebsspindel mit einer Spindelachse, mit einem entlang der Spindelachse ausgerichteten Spindeltrieb, mit einem Antriebsritzel zum Verdrehen der Antriebsspindel um die Spindelachse und mit einer Spindelmutter auf dem Spindeltrieb, wobei die auf dem Spindeltrieb montierte Spindelmutter infolge einer Verdrehung des Spindeltriebs eine translatorische Bewegung entlang der Spindelachse ausführt;
- einen um eine Rotationsachse verdrehbaren Nachstellring mit zumindest einer Rampe zum Ausgleichen einer verschleißbedingten Veränderung eines Rückwegs einer Anpressplatte, wobei die Rotationsachse im Zusammenbau quer zur Spindelachse ausgerichtet ist;
- ein biegeelastisches Zugelement zur Verbindung der Spindelmutter mit dem Nachstellring, wobei mittels des Zugelements eine Nachstellkraft geneigt zur Spindelachse in den Nachstellring einleitbar ist.

Die Nachstelleinrichtung ist dazu eingerichtet, eine Reibkupplung trotz Verschleißes des zumindest einen Reibbelags der Reibkupplung über einen (nahezu) konstanten Betätigungsweg betätigen zu können, wobei zugleich der Einrückweg der Anpressplatte der Reibkupplung (nahezu) konstant bleibt. Die Nachstelleinrichtung umfasst dabei eine Antriebsspindel mit einer Spindelachse, die dazu vorgesehen ist, eine Veränderung der Anpresskraft oder des Einrückwegs auszugleichen, indem die Antriebsspindel über ein Antriebsritzel verdreht wird und somit eine Spindelmutter, die auf dem Spindeltrieb der Antriebsspindel sitzt, translatorisch bewegt. Besonders bevorzugt wird das Antriebsritzel weggesteuert von einem an einem axial fixierten Bauteil, zum Beispiel einem Kupplungsdeckel oder einer Zentralscheibe, der Reibkupplung befestigten Antriebsklinke angetrieben. Die Spindelachse stellt das Rotationszentrum des Antriebsritzels dar und die translatorische Bewegungsrichtung der Spindelmutter auf dem Spindeltrieb.

Des Weiteren umfasst die Nachstelleinrichtung einen verdrehbaren Nachstellring, dessen Rotationsachse quer zur Spindelachse ausgerichtet ist. Somit entsteht zwischen dem Nachstellring und der Antriebsspindel beziehungsweise der Spindelmutter während der Bewegung des Nachstellrings eine Abstandsveränderung aufgrund der (kreisförmigen) Umlaufbewegung des Nachstellrings und der rein translatorischen Bewegung der Spindelmutter. Der Nachstellring weist zumindest eine Rampe auf. Besonders bevorzugt weist der Nachstellring drei Rampen mit einer geringen Steigung auf, die über den Umfang des Nachstellrings (möglichst großflächig) gleichmäßig verteilt angeordnet sind. Die zumindest eine Rampe ist dazu eingerichtet, mit zumindest einer korrespondierenden Gegenrampe eines Gegenelements eine Rampenpaarung bildend derart zusammenzuwirken, dass eine Gesamthöhe von dem Nachstellring und dem Gegenelement infolge der relativen Verdrehung der Rampen zueinander verändert wird. Damit wird eine Umlaufbewegung in eine Höhenveränderung umgesetzt. Der Nachstellring ist im Zusammenbau der Reibkupplung zwischen einer Betätigungseinrichtung zur Aufbringung der Anpresskraft und einer Anpressplatte der Reibkupplung angeordnet. Der Betätigungsweg der Betätigungseinrichtung bleibt dadurch sowohl von der Lage als auch von der Länge (nahezu) konstant. Die Anpressplatte wird mit dem zunehmenden Verschleiß der Reibbeläge hin zu einer korrespondierenden Reibscheibe verlagert, wobei der Einrückweg (nahezu) konstant gehalten wird.

Zur Überbrückung der relativen Bewegung zwischen der translatorisch bewegten Spindelmutter und dem umfänglich bewegten Nachstellring beziehungsweise einem Anbindungselement des Nachstellrings ist ein biegeelastisches Zugelement vorgesehen, sodass eine Veränderung des Abstands zwischen dem Nachstellring und der Spindelmutter durch das biegeelastische Zugelement ausgeglichen werden kann. Zugleich wird der Einleitungswinkel der Nachstellkraft auf den Nachstellring verändert, sodass der Nachstellring, welcher eine Umfangsbewegung beschreibt, nicht unabhängig von seiner Lage rein translatorisch belastet wird, und so nicht mit einer übermäßigen Kraft entgegen seiner Umlaufbahn belastet wird, das heißt mit einem geringen Radialkraftanteil und einem großen Tangentialkraftanteil belastet wird. Besonders bevorzugt liegt der Radialkraftanteil unter 10 %, bevorzugt unter 5 %also die Krafteinleitung bei einem maximalen Winkel zur Tangente im Anbindungspunkt des Nachstellrings von etwa 25° beziehungsweise von etwa 15°. Hierdurch wird verhindert, dass der Nachstellring klemmt oder sogar beschädigt wird. Insbesondere bei Reibkupplungen beziehungsweise Nachstellringen mit einem geringen Radius ist die Relativbewegung zwischen der Spindelmutter und dem Nachstellring besonders groß. Mit der hier vorliegenden Nachstelleinrichtung ist es möglich, eine Rampe mit einem geringen Steigungswinkel zu verwenden, was einen langen Umlaufweg für den Nachstellring bedingt. Eine Rampe mit einer geringen Steigung ist vorteilhaft in Bezug auf die Selbsthemmung und die Baulänge in axialer Richtung. Zudem wird die Überdeckungslänge zwischen Rampe und Gegenrampe länger, wodurch eine geringere Flächenpressung realisierbar ist.

Gemäß der Erfindung weist das biegeelastische Zugelement im Zusammenbau über ein relativ zur Antriebsspindel fixiertes Umlenkmittel in sich eine Neigung auf.

In dieser Ausführungsform der Nachstelleinrichtung weist die Nachstelleinrichtung eine Neigung beziehungsweise einen Knick auf, welcher durch ein Umlenkmittel erzeugt wird. Das heißt, das biegeelastische Zugelement ist auf der einen Seite vom Umlenkmittel in einem ersten Winkel zur Spindelachse ausgerichtet und hinter dem Umlenkmittel in einem zweiten Winkel zur Spindelachse ausgerichtet, wobei sich der erste Winkel und der zweite Winkel unterscheiden. Ganz besonders bevorzugt befindet sich der erste Winkel zur Spindelachse einen Bereich zwischen 1° und 30°, besonders bevorzugt zwischen 10° bis 15°. Der zweite Winkel ist zwischen der Tangente im Anbindungspunkt des Zugelements an dem Nachstellring und dem Zugelement angeordnet und befindet sich im etwa gleichen Bereich wie der oben beschriebene erste Winkel. Das Umlenkmittel ist dabei relativ zur Antriebsspindel fixiert, besonders bevorzugt auf dem gemeinsamen Kupplungsbauteil befestigt, zum Beispiel einer Anpressplatte einer Reibkupplung. Mit dem Umlenkmittel werden mehrere Ziele erreicht: Es wird ein möglichst flacher Eingriffswinkel in die Spindelmutter sowie in den Nachstellring erreicht, und es wird der Raum um den Nachstellring, insbesondere innerhalb der Nachstelleinrichtung, freigebbar, so dass hier weitere, insbesondere zentrale, Elemente eingefügt werden können. Ein solches zentrales Element ist zum Beispiel eine Lagerung und/oder eine Abtriebswelle beziehungsweise ein Verbindungselement der Abtriebswelle der Reibkupplung. Somit ist der Platzbedarf einer solchen Anordnung besonders gering und hervorragend an die Platzverhältnisse in einer Reibkupplung, insbesondere einer Zuschaltkupplung oder Trennkupplung im Zentrum eines Rotors eines elektrischen Antriebs geeignet.

Das biegeelastische Zugelement kann dabei ein Band sein oder ein Blech, welches eine zumindest einmalige Knickung und Rückbiegung (einmaliges Walgen) unter Zugbelastung aushält.

Gemäß einer vorteilhaften Ausführungsform der Nachstelleinrichtung ist die Antriebsspindel radial innerhalb des Nachstellrings angeordnet.

Durch die Anordnung der Antriebsspindel radial innerhalb des Nachstellrings wird radialer Bauraum gewonnen. Die aus dem Stand der Technik bekannten Nachteile eines zu großen Abstands zwischen der Antriebsspindel und dem Nachstellring, welcher durch die innenliegende Anordnung verstärkt wird und insbesondere bei kleinen Nachstellringen nachteilig ist, wird durch die hier vorgeschlagene Verwendung eines biegeelastischen Zugelements beseitigt. Darüber hinaus ist insbesondere mittels eines fixierten Umlenkmittels zugleich der Zentralraum innerhalb der Nachstelleinrichtung großräumig nutzbar.

Gemäß einer weiteren vorteilhaften Ausführungsform der Nachstelleinrichtung weist die Nachstelleinrichtung zumindest eines der folgenden Mittel zur Stellhemmung des Nachstellrings auf:
- ein weiteres Zugelement zur Verbindung der Spindelmutter mit dem Nachstellring, wobei das weitere Zugelement eine dem ersten Zugelement entgegengesetzte Kraft in den Nachstellring einleitet;
- ein Federelement, welches einer Verdrehung des Nachstellrings entgegenwirkt; oder
- ein Reibelement, welches auf den Nachstellring eine Reibkraft aufbringt.

Insbesondere bei einem Zugelement, welches in Druckrichtung Spiel aufweist beziehungsweise die Druckkräfte vom Nachstellring auf die Spindelmutter übertragen kann und umgekehrt, ist es wichtig zu verhindern, dass eine Verdrehung des Nachstellrings stattfindet, ohne dass diese angestoßen wurde. Ein besonders geeignetes Mittel ist es, ein weiteres Zugelement vorzusehen, welches vorzugsweise ebenfalls umgelenkt ist, und eine Zugkraft entgegen der Zugkraft vom ersten Zugelement auf den Nachstellring überträgt und somit den Nachstellring relativ zur Spindelmutter fixiert. Eine weitere Möglichkeit ist es, ein Federelement vorzusehen, welches der Zugkraft des Zugelements auf den Nachstellring entgegen gerichtet ist und dessen Federkraft bei einem Verdrehen des Nachstellrings überwunden werden muss. Eine weitere Möglichkeit ist das Vorsehen eines Reibelements, welches den Nachstellring infolge der aufgebrachten Reibkraft hemmt. Dabei wird das Reibelement in einer vorteilhaften Ausführungsform bei einem angestoßenen Verdrehen des Nachstellrings gelockert, sodass die Reibkraft aufgehoben oder zumindest reduziert wird.

Gemäß einer weiteren vorteilhaften Ausführungsform weist die Antriebsspindel eine Spindelmutter auf, wobei die Spindelmutter einen Führungsstift und ein Sicherungselement sowie eine Befestigungsvorrichtung für ein biegeelastisches Zugelement aufweist.

Die Spindelmutter wird über das Führungselement, zum Beispiel einen, bevorzugt einstückig ausgebildeten, Stift in einer Führungsschiene geführt, die ein Verdrehen der Spindelmutter unterbindet und zugleich eine Verkippung der Mutter verhindert. Des Weiteren ist vorteilhafterweise eine Schiene beziehungsweise ein Schlitz in einer Spindelhalterung gebildet, in die das Führungselement eingreift und weiterhin translatorisch beweglich bleibt. Weiterhin ist ein Sicherungselement vorgesehen, welches das biegeelastische Zugelement der Spindelmutter an der Spindelmutter sichert. Ein solches Sicherungselement ist besonders bevorzugt ein Sicherungsband. Des Weiteren ist ein Befestigungselement vorgesehen, beispielsweise eine Öffnung für eine Befestigungsniet oder ein Einschraubloch für eine Schraube, die das biegeelastische Zugelement zur Krafteinleitung an der Spindelmutter befestigt. Ganz besonders bevorzugt ist das Befestigungselement als Zugelementknopf ausgebildet, welcher, bevorzugt einstückig, eine Erhebung in der Spindelmutter bildet, auf die das Zugelement mit einer geeigneten Öffnung aufführbar ist.

Gemäß einem weiteren Aspekt der Erfindung wird eine Nachstelleinrichtung für eine Reibkupplung vorgeschlagen, welche zumindest die folgenden Komponenten aufweist:
- einen um eine Rotationsachse verdrehbaren Nachstellring mit zumindest einer Rampe zum Ausgleichen einer verschleißbedingten Veränderung eines Rückwegs einer Anpressplatte;
- ein Gegenelement mit zumindest einer zu der zumindest einen Rampe korrespondierenden Gegenrampe, welche zusammen eine Rampenpaarung bilden, wobei der Nachstellring und das Gegenelement mit der aufeinandergesetzten Rampenpaarung eine Gesamthöhe bilden, und wobei die zumindest eine Rampe und die zumindest eine Gegenrampe derart eingerichtet sind, dass durch eine relative Verschiebung zwischen Nachstellring und Gegenelement eine Veränderung der Gesamthöhe bewirkt wird und damit eine Veränderung des Rückwegs einer Anpressplatte ausgleichbar ist;
- eine Mehrzahl von Zentrierbolzen, die in einem zum Gegenelement fixierten Bauteil befestigbar sind und im Zusammenbau den Nachstellring zentrieren und bei einer Verdrehung lagern.

Der hier vorgeschlagene Nachstellring ist wie oben beschrieben dazu vorgesehen, eine Zunahme des Einrückwegs bei der Anpressplatte infolge eines Verschleißes des Reibbelags auszugleichen und so die Betätigungsbewegung (nahezu) konstant zu halten. Hierzu ist ein um eine Rotationsachse verdrehbarer Nachstellring vorgesehen, welcher zumindest eine Rampe aufweist. Die Rotationsachse ist dabei besonders bevorzugt zugleich die Rotationsachse der Reibkupplung, um die die Drehmoment übertragenden Elemente rotieren. Weiterhin umfasst die Nachstelleinrichtung ein Gegenelement mit einer korrespondierenden Anzahl an Gegenrampen, besonders bevorzugt drei Gegenrampen gegenüber von drei Rampen. Bei einem relativen Verdrehen der Rampen gegenüber den Gegenrampen, die jeweils eine Rampenpaarung bilden, wird die Gesamthöhe von Nachstellring und Gegenelement verändert. Damit fällt ein zunehmender Abstand zwischen der Anpressplatte und den Betätigungselementen der Reibkupplung angemessen an den Verschleiß eines Reibbelags überbrückt. Dabei wird der Rückweg der Anpresslatte der Länge nach (nahezu) konstant gehalten aber die Ausgangslage der Anpressplatte verändert.

Weiterhin ist eine Mehrzahl von Zentrierbolzen vorgesehen, über die der Nachstellring im Zusammenbau gelagert wird. Ganz besonders bevorzugt sind drei Zentrierbolzen vorgesehen, die eine ausreichende Lagerung des Nachstellrings bewerkstelligen können. Die Zentrierbolzen sind dabei relativ zum Gegenelement fixiert, wobei diese eine Baueinheit mit einem rotatorisch fixierten Bauteil und zum Beispiel Anpressplatte sein kann (die Anpressplatte ist gegenüber dem mitrotierten Koordinatensystem der Eingangswelle fixiert). Über die Zentrierbolzen wird eine Zentrierung des Nachstellrings erreicht, die reibungsarm ist und verformungsrobust ist. Das heißt eine Verformung des Nachstellrings infolge von einer Krafteinleitung (mit einem hohen Querkraftanteil, zum Beispiel wie oben erläutert aufgrund eines geringen Durchmessers des Nachstellrings) zum Nachstellen des Nachstellrings führt nicht zu einem Verklemmen des Nachstellrings, sondern die Zentrierbolzen tolerieren eine Verformung des Nachstellrings aufgrund der nur wenigen Berührungspunkte mit dem Nachstellring. Zugleich stabilisieren sie den Nachstellring gegen eine solche Verformung und sorgen so in einem angepassten Rahmen für eine sichere Funktion des Nachstellrings bei einer Krafteinleitung mit einem hohen Querkraftanteil in den Nachstellring. Zugleich ist die Lagerung des Nachstellrings besonders platzsparend, weil nur an wenigen Punkten ein Zentrierbolzen vorgesehen werden muss.

Gemäß einer weiteren vorteilhaften Ausführungsform der Nachstelleinrichtung bildet zumindest einer der Zentrierbolzen im Zusammenbau zugleich einen Sperrbolzen für eine Betätigungseinrichtung, sodass eine Verdrehung der Betätigungseinrichtung relativ zum Gegenelement gesperrt ist.

Das Bauteil der Betätigungseinrichtung, welches die Betätigungskraft auf den Nachstellring überträgt, kann durch den Nachstellring mitverdreht werden und somit in seiner Funktion beeinträchtigt werden. Ein solches Bauteil der Betätigungseinrichtung ist zum Beispiel mit einer Mehrzahl von Durchgriffen gebildet, die möglichst in flächige Deckung mit der Rampenpaarung gebracht werden soll, sodass der Nachstellring und das Gegenelement nicht auf Biegung belastet werden, sondern allein auf Druck. Daher ist es besonders vorteilhaft, ein Verdrehen der Betätigungseinrichtung effektiv zu verhindern. Hierzu wird hier vorgeschlagen, den zumindest einen Zentrierbolzen derart anzuordnen, dass die Betätigungseinrichtung über diesen Zentrierbolzen gegen ein Verdrehen gesperrt ist. Beispielsweise kann an einem entsprechenden Bauteil der Betätigungseinrichtung zumindest ein Flansch vorgesehen werden, bevorzugt zwei Flansche, der an dem Zentrierbolzen anliegt, sodass zumindest eine Verdrehrichtung, beziehungsweise beide Verdrehrichtungen, blockiert sind. Ganz besonders bevorzugt bildet der Zentrierbolzen hierbei auch ein radiales Führungselement für zumindest ein Bauteil der Betätigungseinrichtung.

Gemäß einer weiteren vorteilhaften Ausführungsform der Nachstelleinrichtung ist zumindest einer der Zentrierbolzen dazu eingerichtet, im Zusammenbau eine Tellerfeder beziehungsweise eine Hebelfeder einer Reibkupplung zu führen.

In einer besonders vorteilhaften Ausführungsform bildet der zumindest eine Zentrierbolzen zugleich eine Führung für eine Tellerfeder beziehungsweise eine Hebelfeder der Reibkupplung. Hierdurch werden zusätzliche Bauteile, insbesondere Lagerelemente, eingespart. Dabei kann besonders bevorzugt der Zentrierbolzen in den Bereich der Tellerfeder und/oder Hebelfeder der Reibkupplung eine abgesetzte Führungsfläche aufweisen beziehungsweise eine geeignete (Frei-)Form zur Führung der Hebelbewegung der Tellerfeder beziehungsweise Hebelfeder.

Gemäß einer weiteren vorteilhaften Ausführungsform der Nachstelleinrichtung ist zumindest einer der Zentrierbolzen, bevorzugt mindestens drei Zentrierbolzen, radial innerhalb des Nachstellrings anordbar.

Gegenüber einer außen zum Nachstellring angeordneten Anordnung der Zentrierbolzen ist die Innenanordnung besonders tolerant gegen eine Verformung des Nachstellrings. Darüber hinaus wird Bauraum außerhalb des Nachstellrings gewonnen, weil hier keine Lagerelemente vorgesehen werden müssen. Darüber hinaus lässt sich eine Innenanordnung eines Zentrierbolzens insbesondere für eine Führung einer Tellerfeder beziehungsweise Hebelfeder einsetzen.

Gemäß einem weiteren Aspekt der Erfindung wird ein Federelement für eine Antriebseinheit für eine weggesteuerte Nachstelleinrichtung, welche zumindest die folgenden Komponenten aufweist:
- zumindest ein Befestigungsbereich;
- zumindest eine bogenförmige Blattfeder;
- zumindest ein Betätigungsende,
wobei das Betätigungsende mittig auf einer über die bogenförmige Blattfeder gezogene Verbindungslinie zwischen dem zumindest einen Befestigungsbereich angeordnet ist.

Mit dem hier vorgeschlagenen Federelement ist eine besonders günstige Krafteinleitung auf eine Antriebsklinke möglich, die eine kraftvolle aber sanfte Nachstellung des Nachstellrings bewirkt. Dieses Federelement weist einen langen Federarm auf und kann daher kraftvoll gestaltet werden, ohne dass diese Kraft ruckartig abgegeben wird. Gleichzeitig wird über die bogenförmige Blattfeder ein zentraler Bereich freigelassen, in den zum Beispiel eine Abtriebswelle beziehungsweise ein Verbindungselement der Abtriebswelle angeordnet werden kann. Die bogenförmige Blattfeder kann dabei ein Kreisbogensegment bilden, welches auf einem konzentrischen Kreis angeordnet ist wie die Nachstelleinrichtung beziehungsweise die Bauteile der Reibkupplung. Die bogenförmige Blattfeder kann aber auch eine davon abweichende Bogenform aufweisen. Das Betätigungsende ist dabei mittig auf der bogenförmigen Blattfeder angeordnet, sodass das Betätigungsende entlang der Verbindungslinie zum zumindest einen Befestigungsbereich jeweils den gleichen Abstand aufweist. Durch diese Anordnung ist eine besonders günstige Krafteinleitung auf die Antriebseinheit beziehungsweise die Antriebsklinke der weggesteuerten Nachstelleinrichtung möglich. Bevorzugt ist ein Befestigungsbereich bei einer geschlossenen Form des Federelements vorgesehen und dann das Betätigungsende auf einem diametral gegenüberliegenden Bereich des Federelements angeordnet. Ganz besonders bevorzugt bildet das Federelement eine Hufeisenform mit zwei Befestigungsbereichen, wobei in der Mitte der Hufeisenform das Betätigungsende vorgesehen ist.

Gemäß einer weiteren vorteilhaften Ausführungsform des Federelements sind zwei Befestigungsbereiche vorgesehen und die bogenförmige Blattfeder überbrückt einen Winkel zwischen 90° und 270°, bevorzugt 170° bis 230°.

Bei dieser Ausführungsform ist das Federelement in Hufeisenform gebildet, wobei es bevorzugt ein Kreisbogensegment bildet. Hierbei ist ein besonders langer Federarm erreichbar und zugleich ein freiliegender zentraler Raum geschaffen. Die Befestigungsbereiche sind bevorzugt Durchgangslöcher für ein Niet oder eine Verschraubung, sind aber auch Verschweißungen, insbesondere Widerstandsverschweißungen möglich. Ganz besonders bevorzugt ist der Winkelbereich bei 180° oder ein wenig darüber, sodass sich die bogenförmige Blattfeder wieder ein wenig schließt.

Gemäß einem weiteren Aspekt der Erfindung wird eine Antriebseinheit für eine weggesteuerte Nachstelleinrichtung vorgeschlagen, welche zumindest die folgenden Komponenten aufweist:
- ein Federelement gemäß der obigen Beschreibung;
- zumindest eine Antriebsklinke mit einem Haltebereich und einem Eingriffsbereich zum gefederten, weggesteuerten Antreiben eines Antriebsritzels einer Nachstelleinrichtung;
- ein axial fixiertes Kupplungsbauteil, an welchem das Federelement über den zumindest einen Befestigungsbereich und die zumindest eine Antriebsklinke mit dem Haltebereich befestigt sind, sodass das Federelement mit seinem Betätigungsende einer Auslenkung des Eingriffsbereichs entgegenwirkt.

Die hier vorgeschlagene Antriebseinheit weist eine Antriebsklinke auf, die über einen Haltebereich mit einem fixierten Bauteil befestigt ist, besonders bevorzugt vernietet oder verschraubt, aber auch verschweißt sein kann. Über den Eingriffsbereich greift die Antriebsklinke in ein Antriebsritzel ein, und verdreht das Antriebsritzel bei einer Relativbewegung zwischen dem Eingriffsbereich und dem Antriebsritzel. Ganz besonders bevorzugt ist dabei weiterhin eine Sperrklinke vorgesehen, die die Aufgabe des Fixierens des Antriebsritzels nach einer erfolgten Nachstellung in einer Nachstellrichtung von der Antriebsklinke separiert. Somit kann das Antriebsritzel nicht durch die Antriebsklinke in rückwärtiger Richtung zurückgedreht werden, sondern nur in einer Nachstellrichtung verdreht werden. Vergrößert sich der Hub infolge eines Verschleißes eines Reibbelags einer Reibkupplung, so überspringt die Antriebsklinke einen Zahn des Antriebsritzels und stellt dieses bei einem Einrücken (beziehungsweise je nach Konfiguration bei einem Ausrücken) in Nachstellrichtung nach, sodass eine Antriebsspindel verdreht wird und somit die Nachstelleinrichtung nachgestellt wird. Diese Nachstellung erfolgt jedoch nicht starr, sondern die Antriebsklinke weicht bei einem Übergriff in einen nächsten Zahn zunächst aus und wird dann mit Hilfe des Federelements sanft in die Ursprungslage zurückgeführt. Hierzu sind sowohl die Antriebsklinke als auch das Federelement an einem axial fixierten Kupplungsbauteil befestigt, und befinden sich in einer zur Anpressplatte parallelen flachen Lage, nachdem eine Nachstellung stattgefunden hat, beziehungsweise im Neuzustand. Ganz besonders bevorzugt sind dabei das Federelement und die Antriebsklinke mit ihrem Haltebereich beziehungsweise Befestigungsbereich einander (diametral) entgegengesetzt angeordnet, sodass sie zueinander eine V-Form zur Rotationsachse der Reibkupplung bilden, wenn die Antriebsklinke infolge eines Überspringens eines Zahns des Antriebsritzels ausgelenkt wird. Somit werden die Berührungspunkte minimiert und Reibungseffekte zwischen dem Federelement und der Antriebsklinke weitestgehend vermieden.

Gemäß einem weiteren Aspekt der Erfindung wird eine weggesteuerte Nachstelleinrichtung für eine Reibkupplung vorgeschlagen, welche zumindest die folgenden Komponenten aufweist:
- eine Antriebsspindel mit einer Spindelachse, mit einem entlang der Spindelachse ausgerichteten Spindeltrieb, mit einem Antriebsritzel zum Verdrehen der Antriebsspindel um die Spindelachse und mit einer Spindelmutter auf dem Spindeltrieb, wobei die auf dem Spindeltrieb montierte Spindelmutter infolge einer Verdrehung des Spindeltriebs eine translatorische Bewegung entlang der Spindelachse ausführt;
- einen um eine Rotationsachse verdrehbaren Nachstellring mit zumindest einer Rampe zum Ausgleichen einer verschleißbedingten Veränderung eines Rückwegs einer Anpressplatte, wobei die Rotationsachse im Zusammenbau quer zur Spindelachse ausgerichtet ist;
- ein Übertragungselement zum Übertragen einer Nachstellkraft von der Spindelmutter auf den Nachstellring;
- eine Antriebseinheit gemäß der obigen Beschreibung zum weggesteuerten Antreiben der Antriebsspindel über das Antriebsritzel.

Die hier vorgeschlagene Nachstelleinrichtung ist dazu vorgesehen, bei einer Zunahme des Einrückwegs einer Anpressplatte die Anpressplatte zu verlagern und zugleich den Betätigungsweg (nahezu) konstant zu halten. Hierzu ist ein um eine Rotationsachse verdrehbarer Nachstellring vorgesehen, welcher zumindest eine Rampe aufweist. Die Rotationsachse ist dabei besonders bevorzugt zugleich die Rotationsachse der Reibkupplung, um die die Drehmoment übertragenden Elemente rotieren. Der Nachstellring ist dazu eingerichtet mit einem Gegenelement mit einer korrespondierenden Anzahl an Gegenrampen zusammenzuwirken, besonders bevorzugt drei Gegenrampen gegenüber von drei Rampen. Bei einem relativen Verdrehen der Rampen gegenüber den Gegenrampen, die jeweils eine Rampenpaarung bilden, wird die Gesamthöhe von Nachstellring und Gegenelement verändert. Damit fällt ein zunehmender Abstand zwischen der Anpressplatte und den Betätigungselementen der Reibkupplung angemessen an den Verschleiß eines Reibbelags überbrückt. Dabei wird der Rückweg der Anpresslatte der Länge nach (nahezu) konstant gehalten aber die Ausgangslage der Anpressplatte verändert.

Die Nachstelleinrichtung umfasst weiterhin eine Antriebsspindel mit einer Spindelachse, die dazu vorgesehen ist, eine Veränderung der Anpresskraft oder des Einrückwegs auszugleichen, indem die Antriebsspindel über ein Antriebsritzel verdreht wird und somit eine Spindelmutter, die auf dem Spindeltrieb der Antriebsspindel sitzt, translatorisch bewegt. Das Antriebsritzel wird weggesteuert von einem an einem axial fixierten Bauteil, zum Beispiel einem Kupplungsdeckel oder einer Zentralscheibe, der Reibkupplung befestigten Antriebsklinke angetrieben. Die Spindelachse stellt das Rotationszentrum des Antriebsritzels dar und die translatorische Bewegungsrichtung der Spindelmutter auf dem Spindeltrieb.

Mittels des Übertragungselements wird die translatorische Bewegung der Spindelmutter mittels einer Anbindung an den Nachstellring übertragen und in eine Umlaufbewegung übersetzt.

Mit der oben beschriebenen Antriebseinheit können Nachstelleinrichtungen mit einem geringen Durchmesser vorteilhaft angetrieben werden, wobei eine sanfte Krafteinleitung (also mit geringem Ruck) bei gleichzeitiger maximalem Raumgewinn möglich ist.

Die oben beschriebenen verschiedenen Aspekte der Erfindung sind jeweils miteinander kombinierbar und führen zu einer besonders vorteilhaften Ausführungsform einer Nachstelleinrichtung. Ganz besonders bevorzugt weist also die Nachstelleinrichtung drei innenliegenden Zentrierbolzen auf, einen innenliegenden Spindeltrieb, welcher über ein biegeelastisches Zugelement die Nachstellkraft über eine Umlenkrolle auf den Nachstellring überträgt und dabei eine weggesteuerte Antriebsklinke mittels eines bogenförmigen Federelements bei einem Anstoßen des Antriebsritzels für eine Durchführung der Kraftübertragung infolge der Wegzunahme sanft auf die Antriebsklinke und damit sanft auf das Antriebsritzel überträgt. Dabei sind bevorzugt sechs flache Rampenpaarungen vorgesehen, wobei entsprechend sechs Durchgriffe eines Betätigungselements derart einrichtbar sind, dass die Durchgriffe immer in einem Bereich auf den Nachstellring einwirken, in dem die Rampenpaarung flächig aufeinanderliegt, sodass allein eine Druckkraft übertragen wird und keine Biegung in den Nachstellring induziert wird.

Es ist auch unmittelbar klar, dass auch nur einige Elemente der Erfindung miteinander kombinierbar sind und bereits zu vorteilhaften Ausgestaltungen führen.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket mit zumindest einer Anpressplatte und zumindest einer korrespondierenden Reibscheibe, wobei zwischen der zumindest einen Anpressplatte und der zumindest einen korrespondierenden Reibscheibe zumindest ein verschleißbarer Reibbelag angeordnet ist, und wobei über das Reibpaket im angepressten Zustand mittels des zumindest einen Reibbelags ein Drehmoment übertragbar ist; und
- zumindest eine Nachstelleinrichtung nach einem der vorhergehenden Ansprüche, die dazu eingerichtet ist, eine Veränderung eines Abstands zwischen der zumindest einen Anpressplatte und der zumindest einen korrespondierenden Reibscheibe bei einer abnehmenden Gesamtdicke des zumindest einen Reibbelags auszugleichen.

Die Reibkupplung ist dazu eingerichtet, ein Drehmoment lösbar von einer Abtriebswelle auf einen Antriebsstrang und umgekehrt zu bewerkstelligen. Dies wird in der Regel über das zumindest eine Reibpaket erreicht, welches eine axial verschiebliche, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Aufgrund des Einrückvorgangs mit, mitunter hoher Relativgeschwindigkeit zwischen der Anpressplatte und der zumindest einen Reibscheibe, sowie aufgrund eines mitunter hohen (einseitig anliegenden) Drehmoments kann ein Reibbelag zwischen der Anpressplatte und der zumindest einen Reibscheibe verschlissen werden, das heißt in seiner Dicke abnehmen. Gerade bei einer automatisiert betriebenen Trennkupplung beziehungsweise Zuschaltkupplung mit einer elektrischen und/oder hydraulischen Betätigungseinheit muss eine Veränderung des Betätigungswegs (in engem Rahmen) ausgeschlossen werden. Mit der oben beschriebenen (wegegesteuerten) Nachstelleinrichtung ist eine exakte, robuste und platzsparende Nachstelleinrichtung vorgeschlagen. Die Nachstelleinrichtung ist sogar für die innenliegende Anordnung in einem Rotor eines elektrischen Antriebs geeignet.

Gemäß einem weiteren Aspekt der Erfindung wird ein Hybridantrieb für ein Kraftfahrzeug vorgeschlagen, welcher aufweisend zumindest die folgenden Komponenten aufweist:
- einen elektrischen Antrieb mit einem Anker und einem Rotor;
- eine Verbrennungskraftmaschine;
- eine Reibkupplung gemäß der obigen Beschreibung zum Zuschalten der Verbrennungskraftmaschine mit dem elektrischen Antrieb, sodass der elektrische Antrieb als elektrischer Generator die Drehmomentabgabe in elektrische Energie umwandelt oder das vom elektrischen Antrieb abgegebene Drehmoment von der Drehmomentabgabe der Verbrennungskraftmaschine unterstützt wird,
wobei bevorzugt die Reibkupplung radial innerhalb des Rotors angeordnet ist.

Unter einem Hybridantrieb wird derzeit im Kraftfahrzeugbereich meist die Kombination aus einem elektrischen Antrieb und einem Antrieb mit einer Verbrennungskraftmaschine verstanden, und dieses Verständnis wird auch in dieser Anmeldung zugrunde gelegt. Es sind dabei verschiedene Konfigurationen bekannt, wobei hier ein Hybridantrieb vorgeschlagen wird, welcher sowohl als Parallelschaltung als auch Reihenschaltung verwendet werden kann. Hierbei bildet bevorzugt der elektrische Antrieb den Anschluss zum Getriebe, worüber der Antriebsstrang eines Kraftfahrzeugs angetrieben wird. Der elektrische Antrieb kann dabei als Motor aber auch als Generator verwendet werden, sodass z. B. im Schubbetrieb die Energie in elektrische Energie umgewandelt wird oder aber über die Verbrennungskraftmaschine der elektrische Antrieb als Generator verwendet werden kann. Die Verbrennungskraftmaschine ist dabei über eine Reibkupplung, wie sie oben beschrieben ist, mit dem elektrischen Antrieb verbindbar, sodass also diese Reibkupplung eine Trennkupplung beziehungsweise Zuschaltkupplung bildet.

Gemäß einem weiteren Aspekt der Erfindung wird auch ein Kraftfahrzeug vorgeschlagen, welches einen Hybridantrieb gemäß der obigen Beschreibung aufweist.

Die meisten Kraftfahrzeuge weisen heutzutage einen Frontantrieb auf und ordnen daher bevorzugt den Antrieb vor der Fahrerkabine und quer zur Hauptfahrrichtung an. Der Bauraum ist gerade bei einer solchen Anordnung besonders gering und es ist daher besonders vorteilhaft, einen Antrieb kleiner Baugröße zu verwenden. Der oben vorgeschlagene Hybridantrieb erlaubt einen kleinen Aufbau, wobei zugleich die übliche Anordnung der Verbrennungskraftmaschine im Kraftfahrzeug durch den Hybridantrieb ohne größere Umbaumaßnahmen ersetzt werden kann.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der hier vorgeschlagene Hybridantrieb ist auch in solche Fahrzeuge ohne größere Schwierigkeiten integrierbar.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine Reibkupplung als Zuschaltkupplung im Schnitt,
- Fig. 2:: die Reibkupplung als Zuschaltkupplung in einem weiteren Schnitt,
- Fig. 3:: eine Antriebseinheit in einer Reibkupplung in Draufsicht,
- Fig. 4:: eine Reibkupplung von der Getriebeseite aus gesehen,
- Fig. 5:: eine Rampenpaarung im Neuzustand,
- Fig. 6:: eine Rampenpaarung im Verschleißzustand,
- Fig. 7:: eine Nachstelleinrichtung,
- Fig. 8:: eine Nachstelleinrichtung in Draufsicht,
- Fig. 9:: eine Antriebsspindel in einer Nachstelleinrichtung,
- Fig. 10:: eine Antriebsspindel mit Spindelhalterung,
- Fig. 11:: eine Spindelmutter mit Zugelementknopf,
- Fig. 12:: eine Nachstelleinrichtung in isometrischer Ansicht,
- Fig. 13:: eine isometrische Ansicht einer Spindelmutter mit Zugelementsicherung,
- Fig. 14:: eine alternative Ausführungsform einer Nachstelleinrichtung mit weiterem Zugelement,
- Fig. 15:: eine weitere Ausführungsform einer Nachstelleinrichtung mit Federelement,
- Fig. 16:: eine weitere Ausführungsform der Nachstelleinrichtung mit Reibelement,
- Fig. 17:: einen Hybridantrieb,
- Fig. 18:: ein Kraftfahrzeug mit Hybridantrieb.

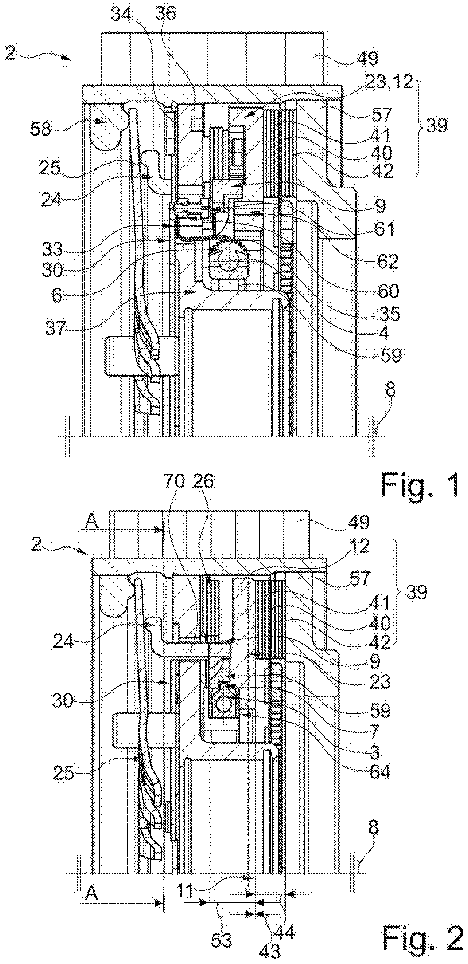

In Fig. 1 ist eine Reibkupplung 2 gezeigt, die als Zuschaltkupplung oder Trennkupplung innerhalb eines Rotors 49 eines elektrischen Antriebs 47 (hier nicht dargestellt) angeordnet ist. Eine Anpressplatte 12 befindet sich hier im angepressten Zustand gegen einen ersten Reibbelag 41 einer Reibscheibe 40 gepresst, sodass ein zweiter Reibbelag 42 gegen eine Gegenplatte 57 gepresst wird und somit ein Reibpaket 39 bildet. Die Anpressplatte 12 ist dabei axial beweglich entlang der Rotationsachse 8. Mittels einer Betätigungseinrichtung 24 wird die Anpressplatte 12 eingerückt, wobei die Betätigungseinrichtung 24 hier über eine Tellerfeder 25 betätigbar ist, und wobei die Tellerfeder 25 an einem Kupplungsdeckel 58 gelagert ist. Die Betätigungseinrichtung 24 greift dabei auf einen Nachstellring 9 durch, welcher mit dem Gegenelement 23, welches einstückig mit der Anpressplatte 12 gebildet ist, auf die Anpressplatte 12 einwirkt. Weiterhin ist hier im Schnitt die Spindelachse 4 zu erkennen, auf der das Antriebsritzel 6 aufgebracht ist. Die Spindelachse 4 ist dabei in einer Spindelhalterung 59 gehalten. In das Antriebsritzel 6 greift eine Antriebsklinke 33 ein, welche an einem festen Kupplungsbauteil 36 in dem Haltebereich 34 der Antriebsklinke 33 befestigt ist und mit dem Eingriffsbereich 35 eine Relativbewegung gegenüber den Zähnen des Antriebsritzels 6 federnd ausweichen kann. Bei einer Nachstellung wird zunächst die Antriebsklinke 33 gegen ihre Federkraft in dieser Ansicht nach links gedrückt, womit die bogenförmige Blattfeder 30 ausgelenkt wird und dann die Antriebsklinke 33 sanft zurückrückt und somit eine Nachstellung mittels des Nachstellrings 9 bewirkt. Zum Justieren sind eine Einpressmutter 60 und eine Justierschraube 61 vorgesehen, welche durch eine Durchgangsöffnung 62 zugänglich ist. Damit kann die Nachstelleinrichtung justiert werden oder von Hand angestoßen werden. Im Rotationszentrum ist eine Abtriebswelle 37 beziehungsweise ein rotationsfestes Verbindungselement einer Abtriebswelle 37 angeordnet.

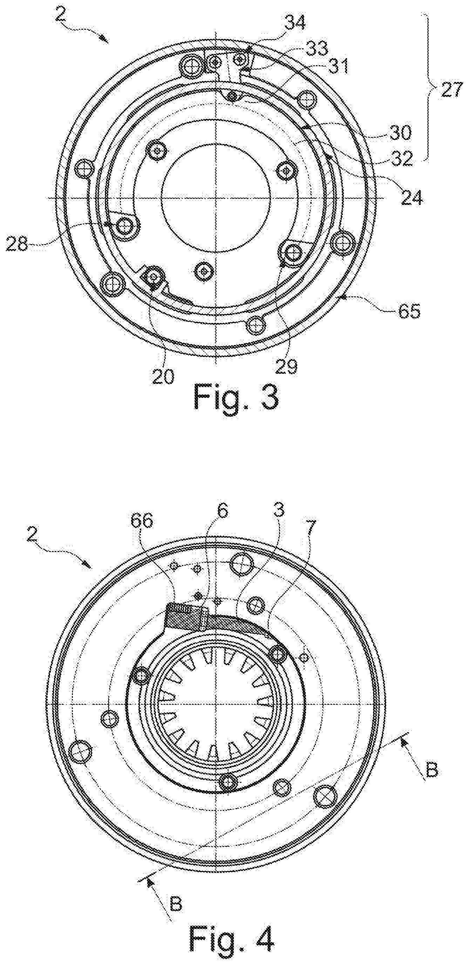

In Fig. 2 ist die gleiche Reibkupplung 2 wie in Fig. 1 in einem Schnitt durch einen anderen Umfangswinkel gezeigt. Hierbei ist die Betätigungseinrichtung 24 mit ihrem Durchgriff 70 erkennbar, welcher auf dem Nachstellring 9 aufliegt, welcher wiederum auf dem Gegenelement 23 aufliegt, welches einstückig mit der Anpressplatte 12 gebildet ist. Weiterhin ist die Spindelmutter 7 im Schnitt gezeigt, welche auf dem Spindeltrieb 3 aufsitzt und über die Spindelhalterung 59 geführt ist. In diesem speziellen Ausführungsbeispiel bildet die Spindelhalterung 59 einen Schlitz, in den ein Vorsprung der Spindelmutter 7 hineinragt, sodass sie nicht der Rotation der Spindelachse 3 folgen kann. Weiterhin ist hier eine Zugelementsicherung 64 im Schnitt zu sehen, welche ein biegeelastisches Zugelement 13 (hier nicht dargestellt) mit der Spindelmutter 7 fest verbinden kann. Die Anpressplatte ist axial beweglich über eine Anpressplattenfeder 26 rotatorisch fixiert. Weiterhin ist hier beispielhaft der Rückweg 11 der Anpressplatte 12 dargestellt, wobei sich hier die Anpressplatte 12 im maximal eingerückten Zustand befindet. Daher ist der Abstand 43 zwischen dem ersten Reibbelag 41 und der Anpressplatte 12 hier Null und im ausgerückten Zustand so groß wie der Rückweg 11. Weiterhin bildet das Gegenelement 23 mit dem Nachstellring 9 eine Gesamthöhe 53, die mittels der Spindelmutter 7 veränderbar ist. Die Gesamthöhe 53 sollte dabei in dem Maße zunehmen wie die Gesamtdicke 44 der Reibbeläge 41 und 42 abnimmt. Weiterhin ist die Schnittebene gezeigt A-A, wie sie in Fig. 3 im Folgenden beschrieben dargestellt ist.

In Fig. 3 ist ein Schnitt (A-A) durch eine Reibkupplung 2, wie in Fig. 1 und Fig. 2, gezeigt. Dabei wird die Sicht frei auf die bogenförmige Blattfeder 30, die zwei Befestigungsbereiche 28 und 29 und eine mittig dazwischen auf der gezogenen Verbindungslinie 32 das Betätigungsende 31 aufweist, welcher auf die Antriebsklinke 33 einwirkt. Somit sind die Befestigungsbereiche 28, 29 sowie die Haltebereich 34 der Antriebsklinke 33 zur Auslenkung beim Betätigungsende 31 jeweils diametral entgegengesetzt angeordnet. Diese bilden zusammen die Antriebseinheit 27 zum Nachstellen der Reibkupplung 2. Die gesamte Reibkupplung 2 ist einem Kupplungsgehäuse 65 untergebracht, welches als Aufnahme für den Rotor 49 eines elektrischen Antriebs 47 (beides nicht dargestellt) dienen kann. Der Nachstellring 9 wird über Zentrierbolzen geführt, von denen hier nur der erste Zentrierbolzen 20 zu sehen ist. Die Betätigungseinrichtung 24 wird über diesen ersten Zentrierbolzen 20 gegen ein Verdrehen gesperrt. Somit kann ein Verdrehen des Nachstellrings 9 (hier verdeckt durch die Betätigungseinrichtung 24) nicht zu einem Verdrehen der Betätigungseinrichtung 24 führen.

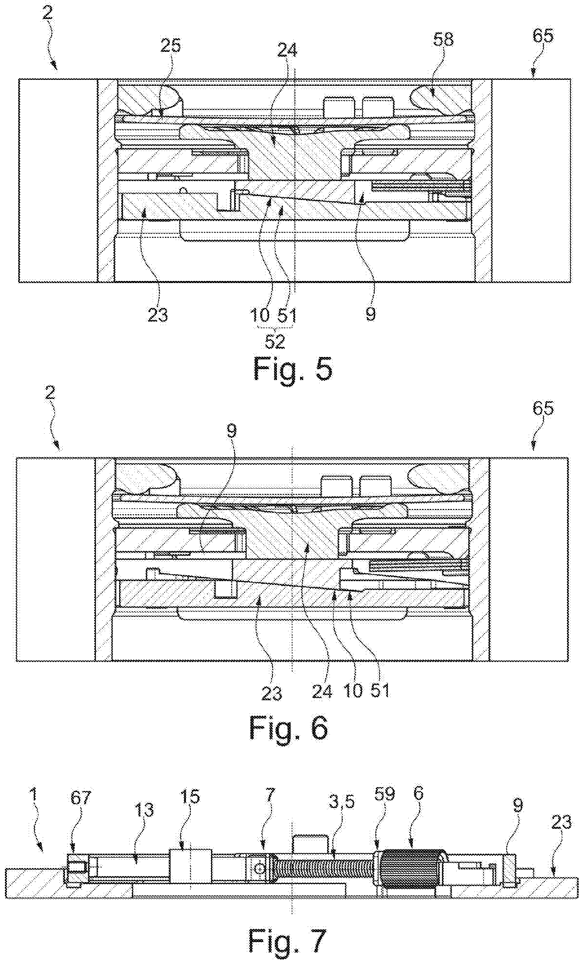

In Fig. 4 ist eine Reibkupplung 2 in getriebeseitiger Draufsicht gezeigt, wobei hier die Antriebsspindel 3 zu erkennen ist und die darauf sitzende Spindelmutter 7 sowie das Antriebsritzel 6, welches Sperrklinken 66 im Eingriff hat. Weiterhin ist die Schnittebene B-B wie in den nachfolgenden Fig. 5 und 6 beschrieben dargestellt.

In Fig. 5 ist die Reibkupplung 2 im Neuzustand im Schnitt B-B wie in Fig. 4 dargestellt gezeigt. Die Betätigungseinrichtung 24 deckt sich dabei mit der in der Darstellung linken Kante der Rampe 10 des Nachstellrings 9. Die Rampe 10 liegt auf der Gegenrampe 51 auf und bildet somit eine Rampenpaarung 52. Um den Umfang verteilt sind mehrere solcher Rampenpaarungen 52 vorgesehen. Die Gegenrampe 51 ist dabei im Gegenelement 23 eingebracht. Die Betätigungseinrichtung 24 ist über eine Tellerfeder 25 betätigbar, wobei die Tellerfeder 25 am Kupplungsdeckel 58 abgestützt ist, welcher mit einem Kupplungsgehäuse 65 rotatorisch fixiert ist.

In Fig. 6 ist die gleiche Darstellung wie in Fig. 5 gezeigt, wobei sich hier die Reibkupplung 2 im maximalen Verschleißzustand befindet, sodass die Betätigungseinrichtung 24 sich mit der in der Darstellung rechten Kante der Rampe 10 in Deckung befindet. Somit ist sichergestellt, dass über den gesamten Nachstellbereich der Nachstellring 9 allein auf Druck belastet wird und nicht auf die Biegung.

In Fig. 7 ist eine Nachstelleinrichtung 1 im seitlichen Schnitt gezeigt, wobei hier ein biegeelastisches Zugelement 13, bevorzugt ein Band, über ein Umlenkelement 15 von der Spindelmutter 7 zur Zugelementanbindung 67 umgelenkt wird. Die Antriebsspindel 3 mit dem Spindeltrieb 5 bewegt die Spindelmutter 7, sodass das biegeelastische Zugelement 13 den Nachstellring 9 in Umfangsrichtung führt. Dabei wird die Spindelmutter 7 über die Spindelhalterung 59 geführt und von dem Antriebsritzel 6 angetrieben. Durch die Rampenpaarung 52 (hier nicht dargestellt) von dem Nachstellring 23 folgt darauf eine axiale Nachstellung mittels der Nachstelleinrichtung 1.

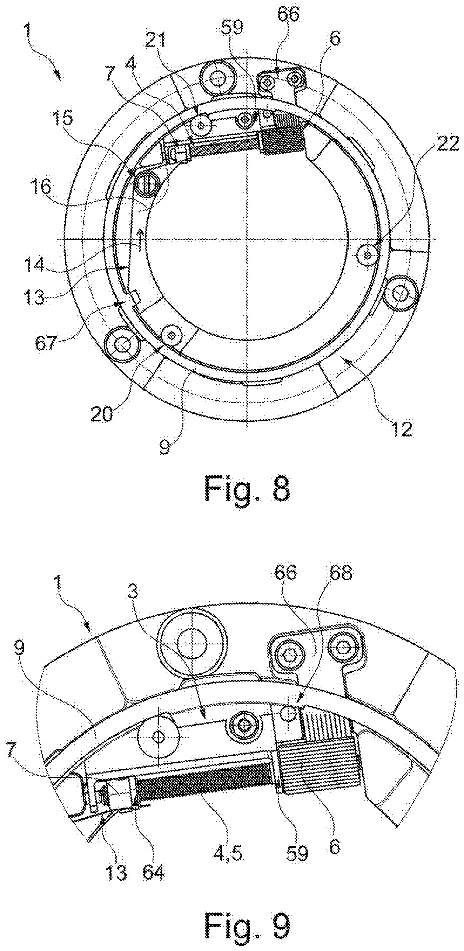

In Fig. 8 ist eine solche Nachstelleinrichtung 1 wie in Fig. 7 in Draufsicht gezeigt, wobei hier die Neigung 16 in dem biegeelastischen Zugelement 13 um das Umlenkelement 15, welches hier als Rolle ausgeführt ist, gut zu erkennen ist. Hierbei ist zu sehen, dass die Nachstellkraft 14 in einem flachen Winkel über die Zugelementanbindung 67 in den Nachstellring 9 eingeleitet wird und zugleich flach von der Spindelmutter 7 auf der Spindelachse 4 ausgeht. Weiterhin ist in dieser Darstellung zu erkennen, dass der Nachstellring 9 über einen ersten Zentrierbolzen 20 und einen zweiten Zentrierbolzen 21 und einen dritten Zentrierbolzen 22 gleichmäßig über den Umfang verteilt geführt wird. Das Antriebsritzel 6 wird von der Sperrklinke 66 in einer eingestellten Position gehalten, sodass die Spindelmutter 7 keine Nachstellung des Nachstellrings 9 anstößt.

In Fig. 9 ist eine Nachstelleinrichtung 1 ausschnittsweise gezeigt, wobei hier der enge Radius des Nachstellrings 9 gegenüber der Antriebsspindel 3 mit ihrer Spindelachse 4 zu erkennen ist. Diese daraus folgende Relativbewegung zwischen dem Nachstellring 9 und der Spindelmutter 7 gleicht das biegeelastische Zugelement 13 nahezu aus. Das biegeelastische Zugelement 13 ist dabei über eine Zugelementsicherung 24 fest mit der Spindelmutter 7 verbunden. Weiterhin ist an dem Nachstellring 9 ein Justierflansch 68 zu erkennen, welcher mit der in der Fig. 1 dargestellten Justierschraube 61 zusammenwirkt.

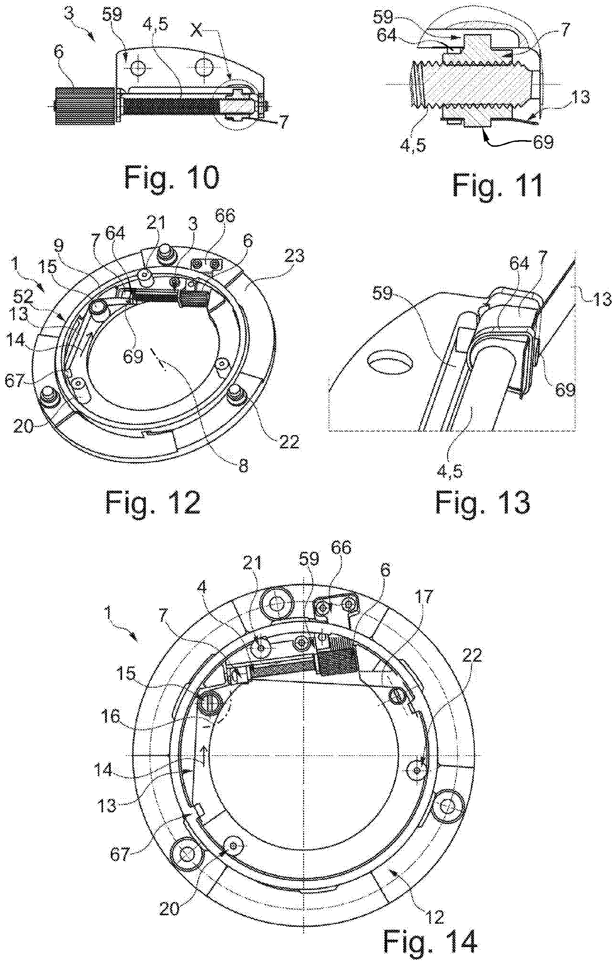

In Fig. 10 ist eine Antriebsspindel 3 gezeigt, welche in einer Spindelhalterung 59 aufgenommen ist. Über ein Antriebsritzel 6 wird eine Spindelachse 4 mit einem Spindeltrieb 5 verdreht, sodass die demgegenüber rotatorisch starre Spindelmutter 7 entlang der Spindelachse bewegt wird.

In Fig. 11 ist das Detail X der Fig. 10 vergrößert dargestellt, wobei eine Auswölbung, zum Beispiel in Stiftform, der Spindelmutter 7 in einem Schlitz der Spindelhalterung 59 wie in einer Schiene geführt ist. Darüber hinaus ist zu erkennen, dass in diesem speziellen Beispiel der Spindelmutter 7 ein Zugelementknopf 69 gebildet ist, welcher ebenfalls eine Auswölbung der Spindelmutter 7 formt, über die das biegeelastische Zugelement 13 mit einer Öffnung darauf geführt werden kann und mittels einer Zugelementsicherung 64, welche die Spindelmutter 7 vollständig umschließt, derart gesichert ist, dass das biegeelastische Zugelement 13 nicht vom Zugelementknopf 69 herunterrutschen kann. Somit ist eine sichere Kraftübertragung von der Spindelmutter 7 auf den Nachstellring 9 (hier nicht dargestellt) möglich.

In Fig. 12 ist eine isometrische Ansicht einer Nachstelleinrichtung 1 gezeigt, bei der ein biegeelastisches Zugelement 13 über ein Umlenkelement 15, welches hier als Rolle ausgeführt ist, über eine Zugelementanbindung 67 und einen Zugelementknopf 69 mit einer Spindelmutter 7 beziehungsweise dem Nachstellring 9 verbunden ist. Somit wird die relative Bewegung zwischen der Zugelementanbindung 67 und der Spindelmutter 7 derart ausgeglichen, dass die Nachstellkraft 14 in einem flachen Winkel eingeleitet wird. Die Antriebsspindel 3 ist dabei innenliegend innerhalb des Nachstellrings 9 angeordnet, wodurch ein Platzgewinn erzielt wird. Das Zentrum um die Rotationsachse 8 ist durch das Umlenkelement 15 weitestgehend frei, sodass weitere Elemente darin vorgesehen werden können, wie es zum Beispiel in Fig. 1 und Fig. 2 gezeigt ist. Die Zentrierbolzen 21 und 22 sind hier kurz ausgeführt, sodass sie allein den Nachstellring 9 führen. Der erste Zentrierbolzen 20 ist länger ausgeführt, um somit einen Sperrbolzen für die Betätigungseinrichtung 24 (hier nicht dargestellt) gegen Verdrehen mit dem Nachstellring 9 zu bilden. Das biegeelastische Zugelement 13 ist hierbei wiederum über eine Zugelementsicherung 64, wie sie in Fig. 11 gezeigt ist, gesichert.

In Fig. 13 ist eine isometrische Ansicht der Spindelmutter 7 gegenelementseitig im Detail gezeigt, wobei hier die Spindelmutter 7 in der Spindelhalterung 59 geführt wird, wobei die Spindelhalterung 59 einen geschlossenen Schlitz bildet, wenn die Spindelhalterung 59 auf dem Gegenelement 23 (vgl. Fig. 12) befestigt ist. Die Zugelementsicherung 64 umschließt die Spindelmutter 7 vollständig und hält das biegeelastische Zugelement 13 sicher an der Spindelmutter 7, sodass das biegeelastische Zugelement 13 über den Zugelementknopf 69 gehalten wird.

In Fig. 14 ist eine Nachstelleinrichtung 1 in Draufsicht gezeigt, bei der der Nachstellring gegen ein Weiterdrehen über die Spindelmutter 7 gesperrt ist, in dem ein weiteres Zugelement 7 vorgesehen ist, welches hier ebenfalls umgelenkt wird, sodass der zentrale Raum innerhalb des Nachstellrings 9 frei bleibt. Im Übrigen sind die Elemente wie oben bereits beschrieben dargestellt.

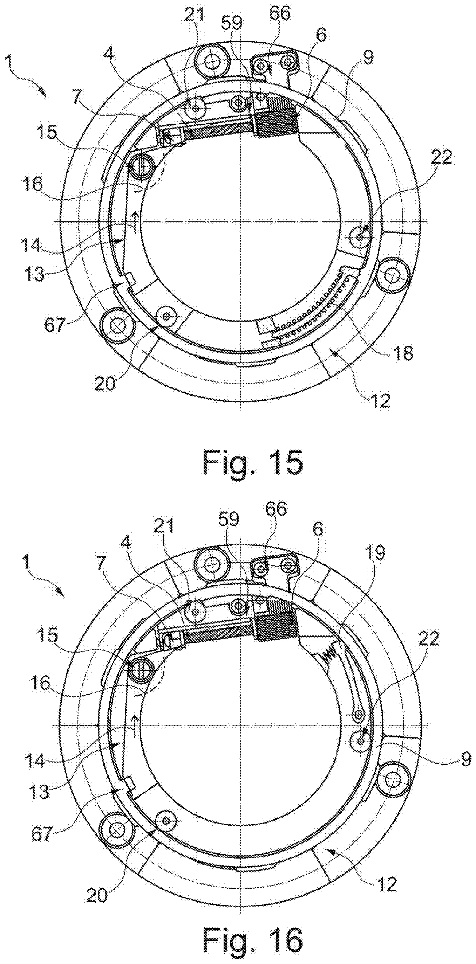

In Fig. 15 ist eine alternative Anordnung der Nachstelleinrichtung 1 wie in Fig. 14 gezeigt, wobei hier der Nachstellring 9 mittels eines Federelements 18 gehemmt ist und somit allein über ein Anstoßen mittels der Spindelmutter 7 in Nachstellrichtung verdreht werden kann.

In Fig. 16 ist eine weitere Variante der Nachstelleinrichtung 1 wie in den Fig. 14 und Fig. 15 gezeigt, wobei hier ein Reibelement 19 vorgesehen ist, welches den Nachstellring 9 hemmt. Das Reibelement 19 ist hierbei als Hebel ausgebildet, und wird mittels Federkraft gegen den Nachstellring 9 gedrückt wird. Vorteilhafterweise ist das Reibelement 19 mit seinem Hebel entgegen der Nachstellrichtung 1 ausgerichtet, sodass die Hemmung besonders groß ist, indem bei unerwünschtem Nachstellen ein Selbsthemmungseffekt auftritt.

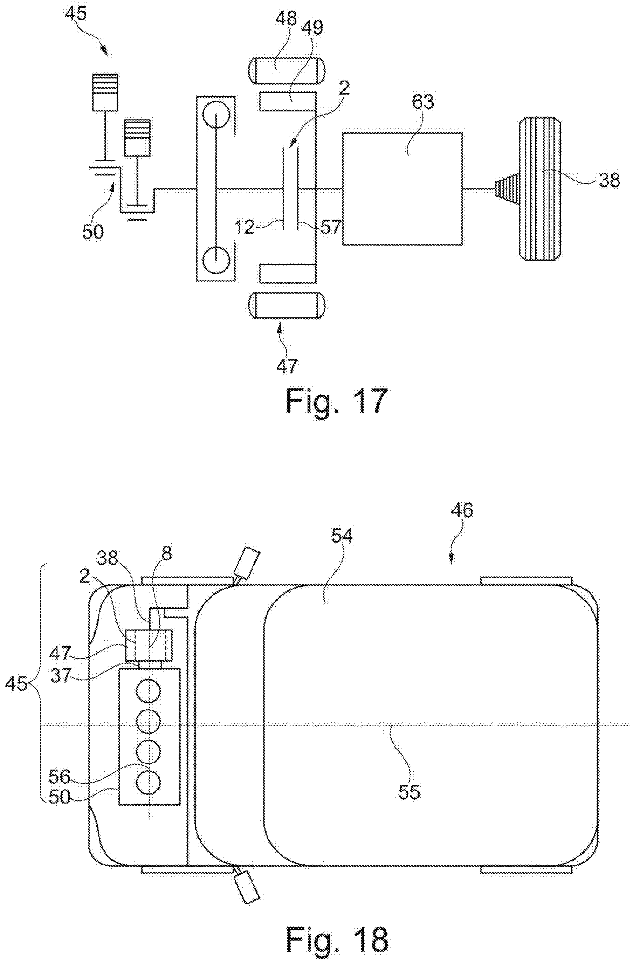

In Fig. 17 ist rein schematisch ein Hybridantrieb 45 gezeigt, bei dem eine Verbrennungskraftmaschine 50 und ein elektrischer Antrieb 47 hintereinandergeschaltet sind, wobei der Rotor 49 mit dem Getriebe 63 verbindbar ist. Über das Getriebe 63 ist ein Antriebsstrang 38 angeschlossen. Der Rotor 49 befindet sich innerhalb eines Ankers 48 und mit dem Rotor 49 ist die Verbrennungskraftmaschine 50 mittels einer Anpressplatte 12 und einer Gegenplatte 57 der Reibkupplung 2 verbindbar. Somit ist der elektrische Antrieb 47 entweder als Generator betreibbar oder kann bei der Drehmomentabgabe durch die Verbrennungskraftmaschine 50 unterstützt werden.

In Fig. 18 ist ein Kraftfahrzeug 46 mit einem Hybridantrieb 45 gezeigt, welcher sich aus einer Verbrennungskraftmaschine 50 und einem elektrischen Antrieb 47 zusammensetzt, wobei hier eine Reibkupplung 2 als Trennkupplung oder Zuschaltkupplung innerhalb des elektrischen Antriebs 47 angeordnet ist. Daraus ergibt sich der Vorteil, dass ein elektrischer Antrieb 47 mit einem großen Durchmesser verwendet werden kann, wodurch ein großes Drehmoment erzeugbar ist und zugleich Platz gespart wird, weil kein zusätzlicher Bauraum für eine Trennkupplung beziehungsweise Zuschaltkupplung notwendig ist. Die Verbrennungskraftmaschine 50 ist zentriert zu ihrer Motorachse 56 über eine Abtriebswelle 37 in Reihe mit der Rotationsachse 8 der Reibkupplung 2 und des elektrischen Antriebs 47 verbunden, sodass das Drehmoment auf den hier rein schematisch dargestellten Antrieb 38 übertragbar ist. Der hier dargestellte Hybridantrieb 45 kann bei sehr kleinen Kraftfahrzeugen 46 vor der Fahrerkabine 54 und quer zur Längsachse 55 mit der Motorachse 56 beziehungsweise Rotationsachse 8 angeordnet werden. Somit ist der Hybridantrieb 45 für engsten Bauraum geeignet.

Die hier vorgeschlagene Nachstelleinrichtung erlaubt eine stabile und robuste Nachstellung auf kleinstem Bauraum integriert in eine Reibkupplung, die als Trennkupplung oder Zuschaltkupplung innerhalb eines elektrischen Antriebs für eine Verbrennungskraftmaschine eingesetzt werden kann.

### Bezugszeichenliste

- 1: Nachstelleinrichtung
- 2: Reibkupplung
- 3: Antriebsspindel
- 4: Spindelachse
- 5: Spindeltrieb
- 6: Antriebsritzel
- 7: Spindelmutter
- 8: Rotationsachse
- 9: Nachstellring
- 10: Rampe
- 11: Rückweg
- 12: Anpressplatte
- 13: Zugelement
- 14: Nachstellkraft
- 15: Umlenkmittel
- 16: Neigung
- 17: weiteres Zugelement
- 18: Federelement
- 19: Reibelement
- 20: erster Zentrierbolzen
- 21: zweiter Zentrierbolzen
- 22: dritter Zentrierbolzen
- 23: Gegenelement
- 24: Betätigungseinrichtung
- 25: Tellerfeder
- 26: Anpressplattenfeder
- 27: Antriebseinheit
- 28: erster Befestigungsbereich
- 29: zweiter Befestigungsbereich
- 30: bogenförmige Blattfeder
- 31: Betätigungsende
- 32: Verbindungslinie
- 33: Antriebsklinke
- 34: Haltebereich
- 35: Eingriffsbereich
- 36: Kupplungsbauteil
- 37: Abtriebswelle
- 38: Antriebsstrang
- 39: Reibpaket
- 40: Reibscheibe
- 41: erster Reibbelag
- 42: zweiter Reibbelag
- 43: Abstand
- 44: Gesamtdicke
- 45: Hybridantrieb
- 46: Kraftfahrzeug
- 47: elektrischer Antrieb
- 48: Anker
- 49: Rotor
- 50: Verbrennungskraftmaschine
- 51: Gegenrampe
- 52: Rampenpaarung
- 53: Gesamthöhe
- 54: Fahrerkabine
- 55: Längsachse
- 56: Motorachse
- 57: Gegenplatte
- 58: Kupplungsdeckel
- 59: Spindelhalterung
- 60: Einpressmutter
- 61: Justierschraube
- 62: Zugangsbohrung
- 63: Getriebe
- 64: Zugelementsicherung
- 65: Kupplungsgehäuse
- 66: Sperrklinken
- 67: Zugelementanbindung
- 68: Justierflansch
- 69: Zugelementknopf
- 70: Durchgriff

## Patentansprüche

1. Nachstelleinrichtung (1) für eine Reibkupplung (2), aufweisend zumindest die folgenden Komponenten:
- einen um eine Rotationsachse (8) verdrehbaren Nachstellring (9) mit zumindest einer Rampe (10) zum Ausgleichen einer verschleißbedingten Veränderung eines Rückwegs (11) einer Anpressplatte (12);
- ein Gegenelement (23) mit zumindest einer zu der zumindest einen Rampe (10) korrespondierenden Gegenrampe (51), welche zusammen eine Rampenpaarung (52) bilden, wobei der Nachstellring (9) und das Gegenelement (23) mit der aufeinandergesetzten Rampenpaarung (52) eine Gesamthöhe (53) bilden, und wobei die zumindest eine Rampe (10) und die zumindest eine Gegenrampe (51) derart eingerichtet sind, dass durch eine relative Verschiebung zwischen Nachstellring (9) und Gegenelement (23) eine Veränderung der Gesamthöhe (53) bewirkt wird und damit eine Veränderung des Rückwegs (11) der Anpressplatte (12) ausgleichbar ist
- eine Antriebsspindel (3) mit einer Spindelachse (4), mit einem entlang der Spindelachse (4) ausgerichteten Spindeltrieb (5), mit einem Antriebsritzel (6) zum Verdrehen der Antriebsspindel (3) um die Spindelachse (4) und mit einer Spindelmutter (7) auf dem Spindeltrieb (5), wobei die auf dem Spindeltrieb (5) montierte Spindelmutter (7) infolge einer Verdrehung des Spindeltriebs (5) eine translatorische Bewegung entlang der Spindelachse (4) ausführt; **gekennzeichnet durch** die folgenden Komponenten:
- eine Mehrzahl von Zentrierbolzen (20,21,22), die in einem zum Gegenelement (23) fixierten Bauteil befestigbar sind und im Zusammenbau den Nachstellring (9) zentrieren und bei einer Verdrehung lagern,
- ein biegeelastisches Zugelement (13) zur Verbindung der Spindelmutter (7) mit dem Nachstellring (9), wobei mittels des Zugelements (13) eine Nachstellkraft (14) geneigt zur Spindelachse (4) in den Nachstellring (9) einleitbar ist, wobei das biegeelastische Zugelement (13) im Zusammenbau über ein relativ zur Antriebsspindel (3) fixiertes Umlenkmittel (15) in sich eine Neigung (16) aufweist.

2. Nachstelleinrichtung (1) nach Anspruch 1, wobei zumindest einer der Zentrierbolzen (20) im Zusammenbau zugleich einen Sperrbolzen für eine Betätigungseinrichtung (24) bildet, sodass eine Verdrehung der Betätigungseinrichtung (24) relativ zum Gegenelement (23) gesperrt ist.

3. Nachstelleinrichtung (1) nach Anspruch 1 oder 2, wobei zumindest einer der Zentrierbolzen (20,21,22) dazu eingerichtet ist, im Zusammenbau eine Tellerfeder (25) beziehungsweise Hebelfeder einer Reibkupplung (2) zu führen.

4. Nachstelleinrichtung (1) nach einem der vorhergehenden Ansprüche, wobei zumindest einer der Zentrierbolzen (20,21,22), bevorzugt mindestens drei Zentrierbolzen (20,21,22), radial innerhalb des Nachstellrings (9) anordbar ist.

5. Nachstelleinrichtung (1) nach einem der vorhergehenden Ansprüche, wobei die Antriebsspindel (3) radial innerhalb des Nachstellrings (9) angeordnet ist.

6. Nachstelleinrichtung (1) nach einem der vorhergehenden Ansprüche, aufweisend eine Antriebseinheit (27) zum weggesteuerten Antreiben der Antriebsspindel (3) über das Antriebsritzel (6) mit zumindest den folgenden Komponenten:
- ein Federelement (18) mit zumindest ein Befestigungsbereich (28,29), mit zumindest einer bogenförmige Blattfeder (30) und mit zumindest einem Betätigungsende (31), wobei das Betätigungsende (31) mittig auf einer über die bogenförmige Blattfeder (30) gezogene Verbindungslinie (32) zwischen dem zumindest einen Befestigungsbereich (28,29) angeordnet ist.;
- zumindest eine Antriebsklinke (33) mit einem Haltebereich (34) und einem Eingriffsbereich (35) zum gefederten, weggesteuerten Antreiben eines Antriebsritzels (6) einer Nachstelleinrichtung (1);
- ein axial fixiertes Kupplungsbauteil (36), an welchem das Federelement (18) über den zumindest einen Befestigungsbereich (28,29) und die zumindest eine Antriebsklinke (33) mit dem Haltebereich (34) befestigt sind, sodass das Federelement (18) mit seinem Betätigungsende (31) einer Auslenkung des Eingriffsbereichs (35) entgegenwirkt.

7. Nachstelleinrichtung (1) nach Anspruch 6, wobei an dem Federelement (18) zwei Befestigungsbereiche (28,29) vorgesehen sind und die bogenförmige Blattfeder (30) einen Winkel zwischen 90° und 270°, bevorzugt 170° bis 230°, überbrückt.

8. Reibkupplung (2) mit einer Rotationsachse (8) zum lösbaren Verbinden einer Abtriebswelle (37) mit einem Antriebsstrang (38), aufweisend zumindest die folgenden Komponenten:
- zumindest ein Reibpaket (39) mit zumindest einer Anpressplatte (12) und zumindest einer korrespondierenden Reibscheibe (40), wobei zwischen der zumindest einen Anpressplatte (12) und der zumindest einen korrespondierenden Reibscheibe (40) zumindest ein verschleißbarer Reibbelag (41,42) angeordnet ist, und wobei über das Reibpaket (39) im angepressten Zustand mittels des zumindest einen Reibbelags (41,42) ein Drehmoment übertragbar ist; und
- zumindest eine Nachstelleinrichtung (1) nach einem der vorhergehenden Ansprüche, die dazu eingerichtet ist, eine Veränderung eines Abstands (43) zwischen der zumindest einen Anpressplatte (12) und der zumindest einen korrespondierenden Reibscheibe (40) bei einer abnehmenden Gesamtdicke (44) des zumindest einen Reibbelags (41,42) auszugleichen.

9. Hybridantrieb (45) für ein Kraftfahrzeug (46), aufweisend zumindest die folgenden Komponenten:
- einen elektrischen Antrieb (47) mit einem Anker (48) und einem Rotor (49);
- eine Verbrennungskraftmaschine (50);
- eine Reibkupplung (2) nach Anspruch 8 zum Zuschalten der Verbrennungskraftmaschine (50) mit dem elektrischen Antrieb (47), sodass der elektrische Antrieb (47) als elektrischer Generator die Drehmomentabgabe in elektrische Energie umwandelt oder das vom elektrischen Antrieb (47) abgegebene Drehmoment von der Drehmomentabgabe der Verbrennungskraftmaschine (50) unterstützt wird,
wobei bevorzugt die Reibkupplung (2) radial innerhalb des Rotors (49) angeordnet ist.

## Claims

1. Adjusting device (1) for a friction clutch (2), having at least the following components:
- an adjusting ring (9) which can be rotated about a rotational axis (8) with at least one ramp (10) for compensating for a wear-induced change in a return travel (11) of a pressure plate (12);
- a counter-element (23) with at least one counter-ramp (51) which corresponds to the at least one ramp (10), which ramps (51, 10) together form a ramp pair (52), the adjusting ring (9) and the counter-element (23) with the ramp pair (52) placed on top of one another forming an overall height (53), and the at least one ramp (10) and the at least one counter-ramp (51) being set up in such a way that, by way of a relative displacement between the adjusting ring (9) and the counter-element (23), a change in the overall height (53) is brought about and therefore a change in the return travel (11) of the pressure plate (12) can be compensated for;
- a drive spindle (3) with a spindle axis (4), with a spindle drive (5) which is oriented along the spindle axis (4), with a drive pinion (6) for rotating the drive spindle (3) about the spindle axis (4), and with a spindle nut (7) on the spindle drive (5), the spindle nut (7) which is mounted on the spindle drive (5) performing a translational movement along the spindle axis (4) as a consequence of a rotation of the spindle drive (5); **characterized by** the following components:
- a plurality of centring pins (20, 21, 22) which can be fastened in a component which is fixed with respect to the counter-element (23) and, when assembled, centre the adjusting ring (9) and mount it in the case of a rotation,
- a resiliently flexible traction element (13) for connecting the spindle nut (7) to the adjusting ring (9), it being possible for an adjusting force (14) to be introduced into the adjusting ring (9) by means of the traction element (13) in an inclined manner with respect to the spindle axis (4), the resiliently flexible traction element (13) having, when assembled, an inclination (16) per se via a deflection means (15) which is fixed relative to the drive spindle (3).

2. Adjusting device (1) according to Claim 1, at least one of the centring pins (20) forming, when assembled, at the same time a locking pin for an actuating device (24), with the result that a rotation of the actuating device (24) relative to the counter-element (23) is locked.

3. Adjusting device (1) according to Claim 1 or 2, at least one of the centring pins (20, 21, 22) being set up, when assembled, to guide a cup spring (25) or lever spring of a friction clutch (2).

4. Adjusting device (1) according to one of the preceding claims, it being possible for at least one of the centring pins (20, 21, 22), preferably at least three centring pins (20, 21, 22), to be arranged radially within the adjusting ring (9).

5. Adjusting device (1) according to one of the preceding claims, the drive spindle (3) being arranged radially within the adjusting ring (9).

6. Adjusting device (1) according to one of the preceding claims, having a drive unit (27) for driving the drive spindle (3) in a displacement-controlled manner via the drive pinion (6) with at least the following components:
- a spring element (18) with at least one fastening region (28, 29), with at least one arcuate leaf spring (30), and with at least one actuating end (31), the actuating end (31) being arranged centrally on a connecting line (32) which is drawn via the arcuate leaf spring (30) between the at least one fastening region (28, 29);
- at least one drive pawl (33) with a holding region (34) and an engagement region (35) for the sprung, displacement-controlled driving of a drive pinion (6) of an adjusting device (1);
- an axially fixed clutch component (36), to which the spring element (18) is fastened to the holding region (34) via the at least one fastening region (28, 29) and the at least one drive pawl (33), with the result that the spring element (18) counteracts a deflection of the engagement region (35) by way of its actuating end (31).

7. Adjusting device (1) according to Claim 6, two fastening regions (28, 29) being provided on the spring element (18), and the arcuate leaf spring (30) spanning an angle between 90° and 270°, preferably from 170° to 230°.

8. Friction clutch (2) having a rotational axis (8) for releasably connecting an output shaft (37) to a drive train (38), having at least the following components:
- at least one friction assembly (39) with at least one pressure plate (12) and at least one corresponding friction disc (40), at least one wearing friction lining (41, 42) being arranged between the at least one pressure plate (12) and the at least one corresponding friction disc (40), and it being possible for a torque to be transmitted via the friction assembly (39) in the pressed-on state by means of the at least one friction lining (41, 42); and
- at least one adjusting device (1) according to one of the preceding claims which is set up to compensate for a change in a spacing (43) between the at least one pressure plate (12) and the at least one corresponding friction disc (40) in the case of a decreasing overall thickness (44) of the at least one friction lining (41, 42) .

9. Hybrid drive (45) for a motor vehicle (46), having at least the following components:
- an electric drive (47) with an armature (48) and a rotor (49);
- an internal combustion engine (50);
- a friction clutch (2) according to Claim 8 for connecting the internal combustion engine (50) to the electric drive (47), with the result that, as an electric generator, the electric drive (47) converts the torque output into electric energy, or the torque which is output by the electric drive (47) is assisted by the torque output of the internal combustion engine (50), the friction clutch (2) preferably being arranged radially within the rotor (49).

## Revendications

1. Dispositif de rattrapage (1) pour un accouplement à friction (2), possédant au moins les composants suivants :
- une bague de rattrapage (9), pouvant tourner autour d'un axe de rotation (8), comprenant au moins une rampe (10) destinée à compenser une modification liée à l'usure d'une course de retour (11) d'une pédale à presser (12) ;
- un contre-élément (23), comprenant au moins une contre-rampe (51) qui correspond à l'au moins une rampe (10) et qui forment ensemble un appariement de rampes (52), la bague de rattrapage (9) et le contre-élément (23) avec l'appariement de rampes (52) superposé formant une hauteur totale (53), et l'au moins une rampe (10) et l'au moins une contre-rampe (51) étant conçues de telle sorte qu'un décalage relatif entre la bague de rattrapage (9) et le contre-élément (23) produit une modification de la hauteur totale (53) et une modification de la course de retour (11) de la pédale à presser (12) peut ainsi être compensée ;
- une broche d'entraînement (3), comprenant un axe de broche (4) avec un mécanisme à vis sans fin (5) orienté le long de l'axe de broche (4), comprenant un pignon d'entraînement (6) destiné à faire tourner la broche d'entraînement (3) autour de l'axe de broche (4) et comprenant un écrou de broche (7) sur le mécanisme à vis sans fin (5), l'écrou de broche (7) monté sur le mécanisme à vis sans fin (5), consécutivement à une rotation du mécanisme à vis sans fin (5), exécutant un mouvement de translation le long de l'axe de broche (4) ;
**caractérisé par** les composants suivants :
- une pluralité de goujons de centrage (20, 21, 22), qui peuvent être fixés dans un élément structural immobile par rapport au contre-élément (23) et qui, en position assemblée, centrent la bague de rattrapage (9) et l'arriment lors d'une rotation,
- un élément de traction (13) à flexibilité élastique destiné à relier l'écrou de broche (7) à la bague de rattrapage (9), une force de rattrapage (14) inclinée par rapport à l'axe de broche (4) pouvant être induite dans la bague de rattrapage (9) au moyen de l'élément de traction (13), l'élément de traction (13) à flexibilité élastique, en position assemblée, possédant de lui-même une inclinaison (16) par le biais d'un.moyen de déviation (15) immobile par rapport à la broche d'entraînement (3).

2. Dispositif de rattrapage (1) selon la revendication 1, au moins l'un des goujons de centrage (20), en position assemblée, formant en même temps un goujon de verrouillage pour un dispositif d'actionnement (24), de sorte qu'une rotation du dispositif d'actionnement (24) par rapport au contre-élément (23) est bloquée.

3. Dispositif de rattrapage (1) selon la revendication 1 ou 2, au moins l'un des goujons de centrage (20, 21, 22) étant conçu pour, en position assemblée, guider une rondelle-ressort (25) ou un ressort de levier d'un accouplement à friction (2).

4. Dispositif de rattrapage (1) selon l'une des revendications précédentes, au moins l'un des goujons de centrage (20, 21, 22), de préférence au moins trois goujons de centrage (20, 21, 22), pouvant être disposés dans le sens radial à l'intérieur de la bague de rattrapage (9).

5. Dispositif de rattrapage (1) selon l'une des revendications précédentes, la broche d'entraînement (3) étant disposée dans le sens radial à l'intérieur de la bague de rattrapage (9).

6. Dispositif de rattrapage (1) selon l'une des revendications précédentes, possédant une unité d'entraînement (27) destinée à entraîner par commande proportionnelle la broche d'entraînement (3) par le biais du pignon d'entraînement (6) avec au moins l'un des composants suivants :
- un élément ressort (18) comprenant au moins une zone de fixation (28, 29) ayant au moins un ressort à lames (30) arqué et ayant au moins une extrémité d'actionnement (31), l'extrémité d'actionnement (31) étant disposée au centre sur une ligne de liaison (32) tracée sur le ressort à lames (30) arqué entre l'au moins une zone de fixation (28, 29) ;
- au moins un cliquet d'entraînement (33) comprenant une zone d'arrêt (34) et une zone de mise en prise (35) servant à l'entraînement à ressorts par commande proportionnelle d'un pignon d'entraînement (6) d'un dispositif de rattrapage (1) ;
- un élément structural d'accouplement (36) immobile dans le sens axial, auquel sont fixés l'élément ressort (18) par le biais de l'au moins une zone de fixation (28, 29) et l'au moins un cliquet d'entraînement (33) avec la zone d'arrêt (34), de sorte que l'élément ressort (18) s'oppose, avec son extrémité d'actionnement (31), à une déviation de la zone de mise en prise (35).

7. Dispositif de rattrapage (1) selon la revendication 6, deux zones de fixation (28, 29) se trouvant sur l'élément ressort (18) et le ressort à lames (30) arqué couvrant un angle entre 90° et 270°, de préférence de 170° à 230°.

8. Accouplement à friction (2) comprenant un axe de rotation (8) servant à la liaison amovible d'un arbre de prise de force (37) avec un groupe motopropulseur (38), possédant au moins les composants suivants :
- au moins un bloc de friction (39) comportant au moins une pédale à presser (12) et au moins un disque de friction (40) correspondant, au moins une garniture de friction (41, 42) usable étant disposée entre l'au moins une pédale à presser (12) et l'au moins un disque de friction (40) correspondant, et un couple pouvant être transmis par le biais du bloc de friction (39) à l'état compressé au moyen de l'au moins une garniture de friction (41, 42) ; et
- au moins un dispositif de rattrapage (1) selon l'une des revendications précédentes, lequel est conçu pour compenser une modification d'un écart (43) entre l'au moins une pédale à presser (12) et l'au moins un disque de friction (40) correspondant lors d'une épaisseur totale (44) qui diminue de l'au moins une garniture de friction (41, 42).

9. Groupe propulseur hybride (45) pour un véhicule automobile (46), possédant au moins les composants suivants :
- un groupe propulseur électrique (47) comprenant un induit (48) et un rotor (49) ;
- un moteur à combustion interne (50) ;
- un accouplement à friction (2) selon la revendication 8 servant à mettre le moteur à combustion interne (50) en circuit avec le groupe propulseur électrique (47), de sorte que le groupe propulseur électrique (47), en tant que générateur électrique, convertit le couple délivré en énergie électrique ou que le couple délivré par le groupe propulseur électrique (47) est assisté par le couple délivré par le moteur à combustion interne (50),
l'accouplement à friction (2) étant de préférence disposé dans le sens radial à l'intérieur du rotor (49).
